# EUROPEAN PATENT APPLICATION

(11) **EP 4 178 026 A1**
(43) Date of publication of application: **10.05.2023**
(21) Application number: 22831221.1
(22) Date of filing: 04.03.2022
(51) Int. Cl.: H01M 50/533, H01M 50/528, H01M 50/586

(54) **CURRENT COLLECTING MEMBER, BATTERY CELL, BATTERY AND ELECTRIC DEVICE**

(30) Priority: 30.06.2021 CN 202121488203 U
(71) Applicant: Contemporary Amperex Technology Co., Limited, Fujian 352100 (CN)
(72) Inventor: LIN, Denghua, Ningde City, Fujian 352100 (CN); SUN, Jie, Ningde City, Fujian 352100 (CN); GUO, Zhijun, Ningde City, Fujian 352100 (CN); WU, Yongbin, Ningde City, Fujian 352100 (CN); WANG, Peng, Ningde City, Fujian 352100 (CN); JIN, Haizu, Ningde City, Fujian 352100 (CN)
(74) Representative: Herrmann, Uwe
(86) International application number: PCT/CN2022/079410
(87) International publication number: WO 2023/273390

(57) **Abstract**

The present application relates to a current collecting member, a battery cell, a battery, and a power consuming device, which belong to the technical field of battery manufacturing. The present application provides a current collecting member for a battery cell. The current collecting member comprises: a terminal connecting portion for connection to an electrode terminal of the battery cell; a tab connecting portion for connection to a tab of the battery cell; and a transitional portion for connecting the terminal connecting portion and the tab connecting portion; wherein the transitional portion has a width greater than that of the tab connecting portion. The present application further provides a battery cell, a battery, and a power consuming device, which comprise the current collecting member. The battery cell, the battery and the power consuming device all have high safety performance and energy density due to the features of the current collecting member.

## Description

### Cross-Reference to Related Applications

The present application claims priority to Chinese patent application no. 202121488203.1, entitled "CURRENT COLLECTING MEMBER, BATTERY CELL, BATTERY, AND POWER CONSUMING DEVICE", filed on June 30, 2021, which is incorporated herein by reference in its entirety.

### Technical Field

The present application relates to the technical field of battery manufacturing, and in particular, to a current collecting member, a battery cell, a battery, and a power consuming device.

### Background Art

Achieving energy conservation and emission reduction is the key to the sustainable development of the automotive industry. Electric vehicles have become an important part of the sustainable development of the automotive industry due to their advantages in energy conservation and environmental protection. In addition, for the electric vehicles, the battery technology is an important factor to their development.

Since safety and energy density are important indicators to measure battery performance, how to improve the safety and energy density of a battery is an urgent technical problem to be solved in the battery technology.

### Summary of the Invention

To this end, the present application provides a current collecting member, a battery cell, a battery, and a power consuming device, so that the influence of an assembly error on an external dimension of the battery cell can be reduced, and the battery cell can thus have high safety performance and energy density.

An embodiment in a first aspect of the present application provides a current collecting member for a battery cell. The current collecting member comprises: a terminal connecting portion for connection to an electrode terminal of the battery cell; a tab connecting portion for connection to a tab of the battery cell; and a transitional portion for connecting the terminal connecting portion and the tab connecting portion; wherein the transitional portion has a width greater than that of the tab connecting portion.

In the above-described solution, since the tab connecting portion has a width smaller than that of the transitional portion, the tab connecting portion has a smaller width, during assembly of the tab connecting portion and the tab, the possibility is reduced that the tab connecting portion is inserted into an electrode assembly, resulting in short circuit inside the battery cell, and the safety performance of the battery cell is improved. Due to the smaller width of the tab connecting portion, the tab connecting portion is less likely to interfere with a housing, so that the possibility is reduced that the tab connecting portion is beyond a contour of the tab, resulting in an increase in the external dimension of the battery cell, and the energy density of the battery cell is improved. Due to the above-described features of the current collecting member, a large assembly error can also be allowed during assembly of the tab connecting portion and the tab, and the assembly precision requirements for the current collecting member and the tab are reduced.

In some embodiments of the present application, the transitional portion comprises a first edge and a second edge that are opposite each other in a width direction thereof, on a plane perpendicular to an extension direction of the tab connecting portion, a projection of the tab connecting portion being located between a projection of the first edge and a projection of the second edge.

In the above-described solution, since the projection of the tab connecting portion is located between the projection of the first edge and the projection of the second edge, the distances between two sides of the tab connecting portion in the width direction and a main body of the electrode assembly or an edge contour of the tab are large, and the two sides of the tab connecting portion in the width direction are less likely to be inserted into the main body of the electrode assembly or to be beyond the edge contour of the tab, further allowing a large assembly error.

In some embodiments of the present application, the tab connecting portion comprises a third edge and a fourth edge that are opposite each other in a width direction thereof, a first step being formed between the third edge and the first edge, and a second step being formed between the fourth edge and the second edge.

In the above-described solution, there is a change in width in a stepwise manner between the transitional portion and the tab connecting portion by means of the first step and the second step, so that an extending length of the tab connecting portion can be large, the distances between the two sides of the portion of the tab connecting portion connected to the transitional portion in the width direction and the main body of the electrode assembly or the edge contour of the tab are large, and the portion of the tab connecting portion connected to the transitional portion is also less likely to be inserted into the main body of the electrode assembly or to be beyond the edge contour of the tab, allowing a large assembly error between the current collecting member and the tab.

In some embodiments of the present application, the third edge is parallel to the first edge, and the fourth edge is parallel to the second edge.

In the above-described solution, it is possible that the tab connecting portion has the same trend of variation in width as the transitional portion, and the distances between two sides of the transitional portion in the width direction and the main body of the electrode assembly or the edge contour of the tab are large, allowing a larger assembly error between the current collecting member and the tab.

In some embodiments of the present application, the transitional portion has a thickness greater than that of the tab connecting portion.

In the above-described solution, by increasing the thickness of the transitional portion, it is possible to increase the overcurrent area of the transitional portion, thereby improving the overcurrent capacity of the current collecting member and reducing the heating temperature of the current collecting member during operation.

In some embodiments of the present application, the transitional portion comprises a first segment and a second segment, one end of the first segment being connected to the terminal connecting portion, the other end of the first segment being connected to one end of the second segment, the other end of the second segment being connected to the tab connecting portion, the first segment being parallel to the tab connecting portion, and the second segment being inclined relative to the first segment and the tab connecting portion.

In the above-described solution, the first segment is parallel to the tab connecting portion so as to be sufficiently attached to an end of the tab, and the second segment is inclined relative to the first segment such that the transitional portion is provided in such a way that it substantially conforms to the tab, the transitional portion is less likely to exceed the maximum external dimension of the electrode assembly, and the external dimension of the housing does not increase, and the energy density of the battery cell is thus improved.

In some embodiments of the present application, the second segment comprises a thickness-gradually varied region and a thickness-maintained region that are connected to each other, the thickness-maintained region being connected to the first segment, the thickness-maintained region having a thickness equal to that of the first segment, the thickness-gradually varied region being connected to the tab connecting portion, and the thickness-gradually varied region having a thickness gradually increasing from the end thereof connected to the tab connecting portion to the end thereof connected to the thickness-maintained region.

In the above-described solution, the second segment comprises a thickness-gradually varied region and a thickness-maintained region that are connected to each other, the thickness-gradually varied region being connected to the tab connecting portion, the thickness-gradually varied region having a thickness gradually increasing from the end thereof connected to the tab connecting portion to the end thereof connected to the thickness-maintained region, so that the overcurrent capacity of the thickness-gradually varied region is gradually improved from the tab connecting portion to the thickness-maintained region, and a high overcurrent capacity is maintained in the thickness-maintained region and the first segment, and the overcurrent capacity of the transitional portion is improved.

An embodiment in a second aspect of the present application provides a battery cell, comprising: a housing provided with an opening; an electrode assembly provided inside the housing, the electrode assembly comprising a tab; an end cap assembly comprising a cover plate and an electrode terminal, the cover plate being used for covering the opening, and the electrode terminal being provided on the cover plate; and a current collecting member provided by the embodiment in the first aspect of the present application, the terminal connecting portion being connected to the electrode terminal, and the tab connecting portion being connected to the tab.

An embodiment in a third aspect of the present application provides a battery, comprising a battery cell provided by the embodiment in the second aspect of the present application.

An embodiment in a fourth aspect of the present application provides a power consuming device, comprising a battery provided by the embodiment in the third aspect of the present application.

Additional aspects and advantages of the present application will be given in part in the following description, and in part will be apparent from the following description, or may be learned by practice of the present application.

### Brief Description of the Drawings

Fig. 1 shows a simple schematic diagram of a vehicle in an embodiment of the present application;
Fig. 2 shows a schematic structural diagram of a battery in the vehicle in Fig. 1;
Fig. 3 shows a schematic structural diagram of one battery cell of the battery in Fig. 2;
Fig. 4 shows a schematic structural diagram of an electrode assembly, assembled with a current collecting member and an end cap assembly, in an embodiment of the present application, from one perspective;
Fig. 5 shows an enlarged partial view at part A in Fig. 4;
Fig. 6 shows a schematic structural diagram of an electrode assembly, assembled with a current collecting member and an end cap assembly, in an embodiment of the present application, from another perspective;
Fig. 7 shows a schematic structural diagram of a current collecting member in an embodiment of the present application, from a first perspective;
Fig. 8 shows a schematic structural diagram of a current collecting member in an embodiment of the present application, from a second perspective;
Fig. 9 shows a schematic structural diagram of a current collecting member in an embodiment of the present application, from a third perspective; and
Fig. 10 shows a schematic structural diagram of a current collecting member in an embodiment of the present application, from a fourth perspective.

The above drawings are not drawn to the actual scale.

List of reference signs: 1000-vehicle; 100-battery; 10-battery cell; 11-housing; 12-end cap assembly; 121-cover plate; 122-electrode terminal; 123-pressure relief portion; 13-electrode assembly; 131-main body; 1311-second contour line; 132-tab; 1321-first contour line; 14-current collecting member; 141-terminal connecting portion; 141 1-terminal via hole; 1412-positioning hole; 142-transitional portion; 1421-first edge; 1422-second edge; 1423-first segment; 1424-second segment; 14241-thickness-gradually varied region; 14242-thickness-maintained region; 143-tab connecting portion; 1431-third edge; 1432-fourth edge; 1433-first step; 1434-second step; 15-insulating member; 20-case; 21-first case; 22-second case; 200-controller; and 300-motor.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Obviously, the embodiments described are some of, rather than all of, the embodiments of the present application. All the other embodiments obtained by those of ordinary skill in the art based on the embodiments of the present application without creative efforts shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprise" and "have" and any variations thereof in the description and the claims of the present application as well as the foregoing description of the drawings are intended to cover non-exclusive inclusions. The terms "first", "second", etc. in the description and the claims of the present application as well as the foregoing drawings are used to distinguish between different objects, rather than describing a specific order or a primary-secondary relationship.

In the present application, the "embodiments" mentioned means that the specific features, structures and characteristics described with reference to the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application may be combined with another embodiment.

In the description of the present application, it should be noted that, the terms "mount", "connected", "connect", or "attach" should be interpreted in a broad sense unless explicitly defined and limited otherwise. For example, the terms may be a fixed connection, a detachable connection, or an integral connection; or may be a direct connection, an indirect connection by means of an intermediate medium, or internal communication between two elements. For those of ordinary skills in the art, the specific meaning of the foregoing terms in the present application may be understood according to specific circumstances.

"A plurality of" appearing in the present application means two or more (including two).

In the present application, a battery cell may include a lithium-ion secondary battery, a lithium-ion primary battery, a lithium-sulfur battery, a sodium/lithium ion battery, a sodium ion battery or a magnesium ion battery, and the like, which is not limited in the embodiments of the present application. The battery cell may be cylindrical, flat, cuboid or in another shape, which is not limited in the embodiments of the present application. The battery cells are generally classified into three types according to a packaging approach: cylindrical battery cells, prismatic battery cells and pouch battery cells.

A battery mentioned in the embodiments of the present application refers to a single physical module comprising one or more battery cells to provide a higher voltage and capacity. For example, the battery mentioned in the present application may comprise a battery module, a battery pack, or the like. The battery generally comprises a case for packaging one or more battery cells. The case can prevent liquid or other foreign objects from affecting charge or discharge of the battery cells.

The battery cell comprises an electrode assembly and an electrolyte solution, wherein the electrode assembly is composed of a positive electrode plate, a negative electrode plate and a separator. The battery cell operates mainly by relying on movement of metal ions between the positive electrode plate and the negative electrode plate. The positive electrode plate comprises a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive tab. A lithium ion battery is taken as an example, the positive electrode current collector may be made of aluminum, and a positive electrode active material may be lithium cobalt oxide, lithium iron phosphate, ternary lithium, lithium manganate, or the like. The negative electrode plate comprises a negative electrode current collector and a negative electrode active material layer. A surface of the negative electrode current collector is coated with the negative electrode active material layer, the positive electrode current collector not coated with the negative electrode active material layer protrudes from the positive electrode current collector coated with the negative electrode active material layer, and the positive electrode current collector not coated with the negative electrode active material layer serves as a negative tab. The negative electrode current collector may be made of copper, and a negative electrode active material may be carbon, silicon, or the like. In order to ensure that no fusing occurs when a large current passes, a plurality of positive tabs are provided and are stacked together, and a plurality of negative tabs are provided and are stacked together. The separator may be made of PP (polypropylene), PE (polyethylene), or the like. In addition, the electrode assembly may be of a wound structure or a laminated structure, which is not limited in the embodiments of the present application.

The battery cell further comprises a pressure relief portion that is actuated when an internal pressure of the battery cell reaches a threshold. The threshold varies according to design demands. The threshold may depend on the material of one or more of the positive electrode plate, the negative electrode plate, the electrolyte solution and the separator of the battery cell. The pressure relief portion may be in the form of, for example, an explosion-proof valve, an air valve, a pressure relief valve, or a safety valve, etc., and may specifically use a pressure- or temperature-sensitive element or structure, namely, when the internal pressure or temperature of the battery cell reaches the threshold, the pressure relief portion performs an action or a weak structure provided in the pressure relief portion is broken, thereby forming an opening or passage through which the internal pressure or temperature can be released.

The term "actuated" mentioned in the present application means that the pressure relief portion performs an action or is activated to be in a certain state such that the internal pressure and temperature of the battery cell can be released. The action performed by the pressure relief portion may include, but is not limited to: at least part of the pressure relief portion cracks, breaks, is torn or opened, etc. When the pressure relief portion is actuated, a high-temperature and high-pressure material inside the battery cell are outwardly discharged as an emission from the opened part. In this way, with the controllable pressure or temperature, the pressure and the temperature of the battery cell can be released, thereby avoiding potentially more serious accidents.

The battery cell further comprises a current collecting member and a busbar component, wherein the current collecting member is used for electrically connecting a tab and an electrode terminal of the battery cell so as to transmit electric energy from an electrode assembly to the electrode terminal and to the outside of the battery cell via the electrode terminal; and a plurality of battery cells are electrically connected to each other by means of the busbar component so as to implement series connection or parallel connection or series-parallel connection between the plurality of battery cells.

In the related art, there is inevitably an assembly error during assembly of a battery cell, which may cause short circuit inside the battery cell or an increase in the total external dimension of the battery cell, and the safety performance and energy density of the battery cell are thus reduced.

The inventor found that, during assembly of the battery cell, there is an assembly error when the current collecting member is welded to the tab, the current collecting member is possibly skewed relative to the tab, and that the greater the magnitude of skew, the greater the magnitude of offset of an end of the current collecting member, and the portion of the current collecting member welded to the tab is likely to be inserted inwardly into a main body of the electrode assembly or to be outwardly beyond an edge contour of the tab. If the portion of the current collecting member welded to the tab is inserted into the main body of the electrode assembly, short circuit will occur inside the battery cell, resulting in a certain potential safety hazard and affecting the safety performance of the battery cell; and if the portion of the current collecting member welded to the tab is beyond the edge contour of the tab, the external dimension of the electrode assembly to which the current collecting member is welded will increase, and thus a large internal space needs to be reserved inside the housing to accommodate the electrode assembly to which the current collecting member is welded, resulting in an increase in the external dimension of the entire battery cell and a decrease in energy density. Therefore, the assembly precision between the current collecting member and the tab has an important influence on the safety performance and the energy density of the battery cell. If it is possible to reduce the influence of the assembly error during the assembly of the current collecting member and the tab on the safety performance and the energy density of the electrode assembly, the assembly precision requirement for the current collecting member and the tab will be reduced, and the safety performance and the energy density of the battery cell will be effectively improved.

On the basis of the above concept, the inventor of the present application provides a technical solution that, by improving the shape and configuration of the current collecting member, it is possible to reduce the assembly precision requirements for the current collecting member and the tab during assembly, and thus the battery cell has high safety performance and energy density.

It should be understood that the battery cells described in the embodiments of the present application can directly supply power to a power consuming device, or form a battery in parallel or series connection so as to supply power to various power consuming devices in the form of the battery.

It should be understood that the power consuming device which uses the battery cell or to which the battery is applicable, described in the embodiments of the present application, may be in multiple forms, for example, a mobile phone, a portable apparatus, a laptop, an electric motorcycle, an electric vehicle, a ship, a spacecraft, an electric toy, an electric tool, etc. For example, the spacecraft includes an airplane, a rocket, a space shuttle, a spaceship, etc. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer.

The battery cell and the battery described in the embodiments of the present application are not only applicable to the power consuming device described above, but also applicable to all power consuming devices using a battery cell and a battery. However, for the sake of brevity of description, the following embodiments will be described taking an electric vehicle as an example.

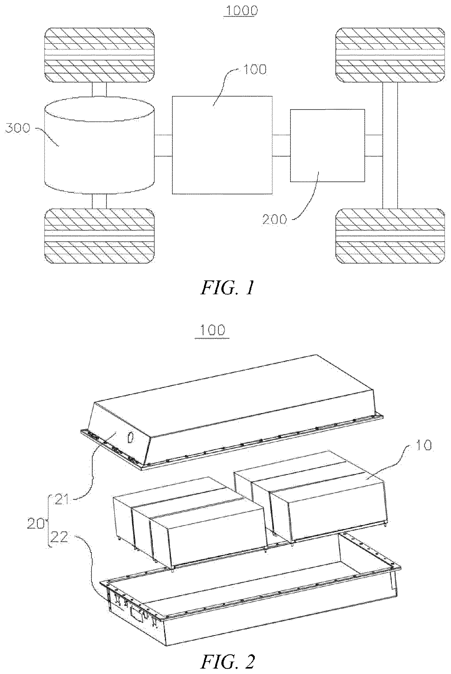

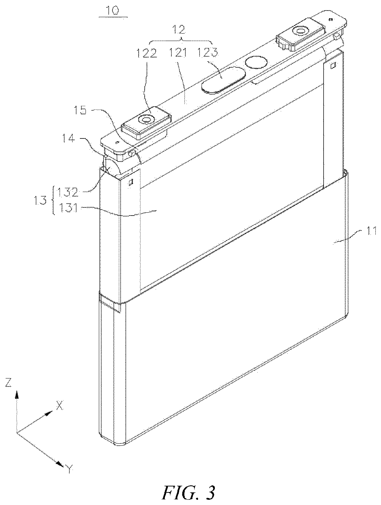

Fig. 1 shows a simple schematic diagram of a vehicle in an embodiment of the present application; Fig. 2 shows a schematic structural diagram of a battery in the vehicle in Fig. 1; and Fig. 3 shows a schematic structural diagram of one battery cell of the battery in Fig. 2.

As shown in Fig. 1, a battery 100, a controller 200, and a motor 300 are provided inside the vehicle 1000. For example, the battery 100 may be provided at the bottom or at the head or tail of the vehicle 1000. The vehicle 1000 may be a fuel vehicle, a gas vehicle, or a new energy vehicle. The new energy vehicle may be a battery electric vehicle, a hybrid electric vehicle, an extendedrange vehicle, etc.

In some embodiments of the present application, the battery 100 may be used for supplying power to the vehicle 1000. For example, the battery 100 may serve as a power source for operating the vehicle 1000. The controller 200 is used for controlling the battery 100 to supply power to the motor 300, for example, for meeting the working power demand during startup, navigation and traveling of the vehicle 1000.

In other embodiments, the battery 100 can not only serve as a power source for operating the vehicle 1000, but can also serve as a power source for driving the vehicle 1000, instead of or partially instead of fuel or natural gas, to provide driving power for the vehicle 1000.

The battery 100 mentioned in the embodiment of the present application refers to a single physical module comprising one or more battery cells to provide a higher voltage and capacity. For example, the battery 100 is composed of a plurality of battery cells 10 connected in series or in parallel.

As shown in Fig. 2, the battery 100 comprises a plurality of battery cells 10 and a case 20, wherein the plurality of battery cells 10 are placed in the case 20. The case 20 comprises a first case 21 and a second case 22, wherein the first case 21 and the second case 22 are fitted to each other in a covered manner to form a battery cavity, and a plurality of battery cells 10 are placed in the battery cavity. The first case 21 and the second case 22 may be shaped depending on the shape of a combination of the plurality of battery cells 10, and each of the first case 21 and the second case 22 has an opening. For example, each of the first case 21 and the second case 22 may be a hollow cuboid and has only one side with an opening, the opening of the first case 21 and the opening of the second case 22 are provided opposite each other, and the first case 21 and the second case 22 are snap-fitted to each other to form the case 20 having a closed cavity. The plurality of battery cells 10 are connected to each other in parallel or in series or in series and parallel before being placed in the case 20 formed by snap-fitting the first case 21 and the second case 22.

As shown in Fig. 3, the battery cell 10 comprises a housing 11, an end cap assembly 12, an electrode assembly 13, and a current collecting member 14.

The housing 11 may be in a hexahedral shape or other shapes, and an accommodating cavity is formed inside the housing 11 to accommodate the electrode assembly 13 and an electrolyte solution. One end of the housing 11 has an opening so that the electrode assembly 13 can be placed inside the housing 11 through the opening. The housing 11 may be made of a metal material, such as aluminum, aluminum alloy, or nickel plated steel.

As shown in Fig. 3, for example, the housing 11 is in the hexahedral shape, with a lengthwise direction extending in an X direction, a height direction extending in a Z direction, and a thickness direction extending in a Y direction, the end of the housing 11 in the Z direction being provided with the opening.

The end cap assembly 12 comprises a cover plate 121, two electrode terminals 122, and a pressure relief portion 123.

The cover plate 121 is used for covering the opening of the housing 11 to close the electrode assembly 13 inside the housing 11. The cover plate 121 is made of a metal material, such as aluminum, and steel. The pressure relief portion 123 is configured to be actuated when the internal pressure of the battery cell 10 reaches the threshold, so as to release the internal pressure and temperature of the battery cell 10.

Two electrode lead-out holes are formed in the cover plate 121, and the two electrode terminals 122 are provided in the two electrode lead-out holes of the cover plate 121. One of the two electrode terminals 122 is a positive electrode terminal, and the other is a negative electrode terminal.

In some embodiments of the present application, the cover plate 121 is in the shape of a flat plate, the cover plate 121 matches the opening of the housing 11 in size and shape, and the cover plate 121 is fixed to the opening of the housing 11, thereby closing the electrode assembly 13 and the electrolyte solution in the accommodating cavity of the housing 11.

As shown in Fig. 3, for example, a lengthwise direction of the cover plate 121 extends in the X direction, a width direction thereof extends in the Y direction, and a thickness direction thereof extends in the Z direction. The pressure relief portion 123 is provided centrally in the cover plate 121 and penetrates the cover plate 121 in the Z direction, and the two electrode terminals 122 are respectively provided on two sides of the pressure relief portion 123 in the X direction.

In other embodiments, depending on the shape of the battery cell 10, the cover plate 121 may also in another shape, such as a circular shape or an elliptical shape, and the electrode terminals 122 and the pressure relief portion 123 may also arranged in another manner.

The electrode assembly 13 is provided inside the housing 11, and the electrode assembly 13 comprises a main body 131 and two tabs 132 opposite in polarity. The main body 131 comprises a positive electrode plate, a negative electrode plate, and a separator, wherein the separator is located between the positive electrode plate and the negative electrode plate for separating the positive electrode plate from the negative electrode plate, so as to prevent positive and negative poles of an electrode unit from being short-circuited. One of the two tabs 132 is a positive tab, and the other is a negative tab. The positive electrode terminal is electrically connected to the positive tab of the electrode assembly 13 by means of one current collecting member 14, and the negative electrode terminal is electrically connected to the negative tab of the electrode assembly 13 by means of the other current collecting member 14.

In some embodiments of the present application, the electrode assembly 13 may be of a wound structure with a winding axis parallel to the X direction.

In other embodiments, the electrode assembly 13 may also be of a laminated structure that is stacked in the Y direction.

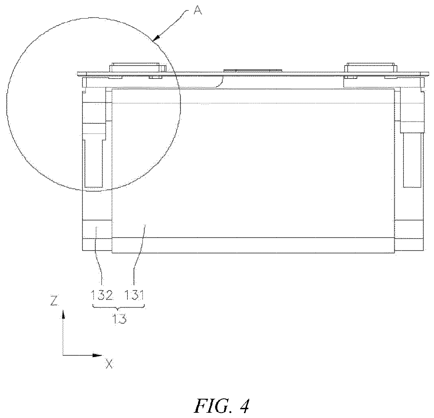

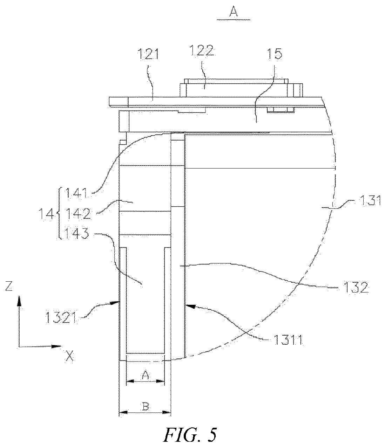

Fig. 4 shows a schematic structural diagram of an electrode assembly, assembled with a current collecting member and an end cap assembly, in an embodiment of the present application, from one perspective; and Fig. 5 shows an enlarged partial view at part A in Fig. 4.

As shown in Figs. 4 and 5, in some embodiments of the present application, a lengthwise direction of the main body 131 extends in the X direction, a thickness direction thereof extends in the Y direction, and a height direction thereof extends in the Z direction, and the two tabs 132 are respectively located at two sides of the main body 131 in the X direction.

In other embodiments, the two tabs 132 may also be located on one side of the main body 131 in the Z direction, and the two tabs and the cover plate 121 are provided on the same side.

The battery cell 10 further comprises an insulating member 15, wherein the insulating member 15 comprises a terminal protrusion connected to the electrode lead-out hole and a positioning protrusion connected to the current collecting member 14. The terminal protrusion is inserted into the electrode lead-out hole, and the electrode terminal 122 passes through the terminal protrusion in the Z direction in insulating manner, and is connected to the busbar component outside the battery cell 10 and to the current collecting member 14 inside the battery cell 10. The insulating member 15 also insulates the cover plate 121 from the current collecting member 14 in the Z direction, so as to avoid conductive connection between the electrode assembly 13 and the cover plate 121.

Two insulating members 15 are provided, and the insulating members 15, the tabs 132, and the electrode terminals 122 and the current collecting members 14 correspond to each other on a oneto-one basis. The two current collecting members 14 are the same in construction, and one of the current collecting members 14 will be taken as an example for detailed description below.

As shown in Fig. 5, the current collecting member 14 comprises a terminal connecting portion 141, a transitional portion 142, and a tab connecting portion 143. The terminal connecting portion 141 is used for connection to the electrode terminal 122 of the battery cell 10, the tab connecting portion 143 is used for connection to the tab 132 of the battery cell 10, and the transitional portion 142 is used for connecting the terminal connecting portion 141 and the tab connecting portion 143. The transitional portion 142 has a width greater than that of the tab connecting portion 143, that is, B > A.

The side of the tab 132 away from the main body 131 in the X direction is contoured as a first contour line 1321, and the side of the main body 131 connected to the tab 132 in the X direction is contoured as a second contour line 1311. The region between the first contour line 1321 and the second contour line 1311 is a region where the tab connecting portion 143 is connected to the tab 132.

During assembly of the tab connecting portion 143 and the tab 132, the tab connecting portion 143 may be beyond the first contour line 1321 and the second contour line 1311. Since the width A of the tab connecting portion 143 is smaller than the width B of the transitional portion 142, the possibility is reduced that the tab connecting portion 143 is inserted into the main body 131 of the electrode assembly 13 beyond the second contour line 1311, resulting in short circuit inside the battery cell 10, and the safety performance of the battery cell 10 is improved, the possibility is also reduced that the tab connecting portion 143 is beyond the first contour line 1321 of the tab 132, resulting in an increase in the external dimension of the battery cell 10, and the energy density of the battery cell 10 is increased. Due to the above-described features of the current collecting member 14, a large assembly error can also be allowed during assembly of the tab connecting portion 143 and the tab 132, and the battery cell 10 has good safety performance and energy density.

In the current collecting member 14 described above, the transitional portion 142 has a width greater than that of the tab connecting portion 143, and the width of a joint between the transitional portion 142 and the tab connecting portion 143 may vary in a stepwise manner, or vary gently in a transitional manner; the tab connecting portion 143 may extend in the same direction relative to the transitional portion 142, or extend obliquely relative to the transitional portion 142; and the tab connecting portion 143 may be of an equal-width structure, or a variable-width structure, etc., and specific implementation will be described in detail below.

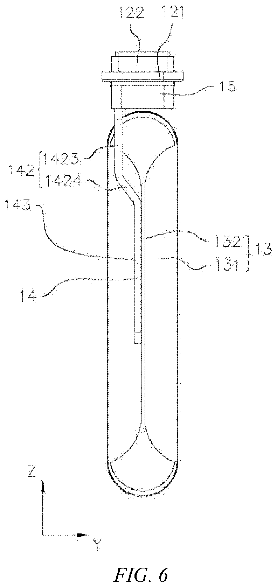

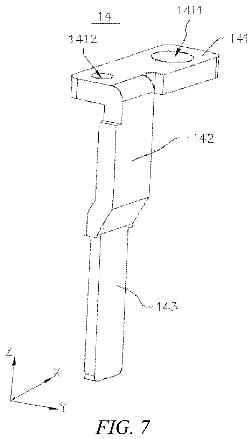

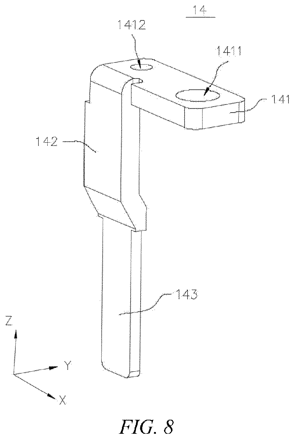

Fig. 6 shows a schematic structural diagram of an electrode assembly, assembled with a current collecting member and an end cap assembly, in an embodiment of the present application, from another perspective; and Figs. 7 and 8 show isometric views of a current collecting member in an embodiment of the present application, from two perspectives.

As shown in Figs. 6, 7, and 8, in some embodiments of the present application, the terminal connecting portion 141 extends in the X direction, with a thickness direction parallel to the Z direction. The terminal connecting portion 141 is provided with a terminal via hole 1411 and a positioning hole 1412 in the thickness direction thereof. The terminal via hole 1411 is used for the electrode terminal 122 to pass through, and two ends of the electrode terminal 122 are riveted in the Z direction to fixedly connect the cover plate 121 to the terminal connecting portion 141. The positioning hole 1412 is used for cooperating with the positioning protrusion of the insulating member 15 so as to position the terminal connecting portion 141 relative to the insulating member 15.

During assembly, the cover plate 121, the electrode terminal 122 and the terminal connecting portion 141 are fixedly connected to each other, the insulating member 15 is limited between the terminal connecting portion 141 and the cover plate 121 in the Z direction, and the cover plate 121, the electrode terminal 122, the current collecting member 14 and the insulating member 15 are fixedly connected to each other by positioning the positioning protrusion and the terminal protrusion in a XY plane relative to the cover plate 121.

In other embodiments, the terminal connecting portion 141 may extend in other directions such that the thickness direction thereof is parallel to the thickness direction of the cover plate 121, which is not further limited in the embodiments of the present application.

In the above-described solution, the tab connecting portion 143 may extend in the same direction relative to the transitional portion 142, or extend obliquely relative to the transitional portion 142.

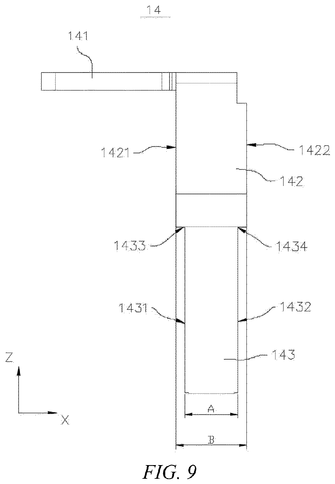

Fig. 9 shows a schematic structural diagram of a current collecting member in an embodiment of the present application, from a third perspective.

As shown in Figs. 8 and 9, in some embodiments of the present application, the transitional portion 142 comprises a first edge 1421 and a second edge 1422 that are opposite in its width direction (i.e., the X direction). On a plane (i.e., the XY plane) perpendicular to an extension direction of the tab connecting portion 143, a projection of the tab connecting portion 143 is located between a projection of the first edge 1421 and a projection of the second edge 1422.

Since the projection of the tab connecting portion 143 is located between the projection of the first edge 1421 and the projection of the second edge 1422, the distances between two sides of the tab connecting portion 143 in the width direction and the first contour line 1321 and the second contour line 1311 are large, and the two sides of the tab connecting portion 143 in the width direction are less likely to be inserted into the main body 131 of the electrode assembly 13 or to be beyond the edge contour of the tab 132, further allowing a large assembly error.

In other embodiments of the present application, on the plane (i.e., the XY plane) perpendicular to the extension direction of the tab connecting portion 143, the projection of the tab connecting portion 143 may also be partially located outside the range of the projection of the first edge 1421 and the projection of the second edge 1422 .

For example, the tab connecting portion 143 extends toward the side away from the main body 131 relative to the transitional portion 142, and part of the projection of the tab connecting portion 143 is located outside the range of the projection of the first edge 1421 and the projection of the second edge 1422 away from the main body 131. It is thus avoided that the tab connecting portion 143 is inserted into the main body 131, resulting in short circuit in the battery cell 10.

For another example, the tab connecting portion 143 extends toward the side close to the main body 131 relative to the transitional portion 142, and part of the projection of the tab connecting portion 143 is located outside the range of the projection of the first edge 1421 and the projection of the second edge 1422 close to the main body 131. It is thus avoided that the tab connecting portion 143 is beyond the outer contour of the tab 132, increasing the external dimension of the electrode assembly 13 mounted with the current collecting member 14 in the X direction.

In other embodiments of the present application, on the plane (i.e., the XY plane) perpendicular to the extension direction of the tab connecting portion 143, the projection of the tab connecting portion 143 may also be all located outside the range of the projection of the first edge 1421 and the projection of the second edge 1422.

For example, the tab connecting portion 143 extends toward the side away from the main body 131 relative to the transitional portion 142, and the entire projection of the tab connecting portion 143 is located outside the range of the projection of the first edge 1421 and the projection of the second edge 1422 away from the main body 131. As another example, the tab connecting portion 143 extends toward the side close to the main body 131 relative to the transitional portion 142, and the entire projection of the tab connecting portion 143 is located outside the range of the projection of the first edge 1421 and the projection of the second edge 1422 close to the main body 131.

In the above-described solution, the width of the joint between the transitional portion 142 and the tab connecting portion 143 may vary in a stepwise manner, or vary gently in a transitional manner.

As shown in Fig. 9, in some embodiments of the present application, the tab connecting portion 143 comprises a third edge 1431 and a fourth edge 1432 that are opposite in the width direction thereof (i.e., the X direction), wherein a first step 1433 is formed between the third edge 1431 and the first edge 1421, and a second step 1434 is formed between the fourth edge 1432 and the second edge 1422.

There is a change in width in a stepwise manner at the joint between the transitional portion 142 and the tab connecting portion 143 by means of the first step 1433 and the second step 1434, so that the extension length of the tab connecting portion 143 can be large, the distances between the two sides of the tab connecting portion 143 in the width direction and the first contour line 1321 and the second contour line 1311 are large, and the portion of the tab connecting portion 143 connected to the transitional portion 142 is also less likely to be inserted into the main body 131 of the electrode assembly 13 or to be beyond the edge contour of the tab 132, allowing a large assembly error between the current collecting member 14 and the tab 132.

In other embodiments, the joint of the transitional portion 142 and the tab connecting portion 143 may also provide a smooth transition so as to improve the overcurrent capacity at the joint between the transitional portion 142 and the tab connecting portion 143.

The first step 1433 and the second step 1434 may be arranged symmetrically or asymmetrically.

In some embodiments of the present application, the first step 1433 and the second step 1434 are a pair of right-angle steps symmetrically provided in the X direction so as to improve the connection strength between the tab connecting portion 143 and the transitional portion 142.

In other embodiments, the first step 1433 and the second step 1434 may be asymmetrically provided in the X direction, for example, in the X direction, the second step 1434 on the side close to the main body 131 has a width greater than that of the first step 1433 on the other side, so as to prevent the possibility that the fourth edge 1432 of the tab connecting portion 143 is inserted into the main body 131, resulting in short circuit in the battery cell 10.

In some embodiments of the present application, the third edge 1431 is parallel to the first edge 1421, and the fourth edge 1432 is parallel to the second edge 1422.

In this form, it is possible that the tab connecting portion 143 has the same trend of variation in width in the extension direction thereof as the transitional portion 142, and while maintaining the tab connecting portion 143 having a width enough to ensure the welding area thereof with the tab 132, it is also possible that the projection of the tab connecting portion 143 on the plane perpendicular to the extension direction of the tab connecting portion 143 (i.e., the XY plane) is located between the projection of the first edge 1421 and the projection of the second edge 1422, and the distances between the two sides of the tab connecting portion 143 in the width direction and the first contour line 1321 and the second contour line 1311 are large, so that the original external dimension of the battery cell 10 can also be maintained even with a large assembly error.

In other embodiments of the present application, the third edge 1431 and the first edge 1421 may be inclined relative to each other, and the fourth edge 1432 and the second edge 1422 may be inclined relative to each other so as to flexibly adjust the shape of the tab connecting portion 143, so that the tab connecting portion has a sufficient area for welding to the tab 132, the first edge 1421 and the second edge 1422 are not beyond the first contour line 1321 and the second contour line 1311, and the safety performance and the energy density of the battery cell 10 are ensured.

In some embodiments of the present application, the first edge 1421, the second edge 1422, the third edge 1431, and the fourth edge 1432 all extend in the Z direction, the first contour line 1321 and the second contour line 1311 also extend in the Z direction, the first edge 1421 and the third edge 1431 are less likely to be beyond the first contour line 1321, and the second edge 1422 and the fourth edge 1432 are less likely to be beyond the second contour line 1311.

In other embodiments, the first edge 1421, the second edge 1422, the third edge 1431, and the fourth edge 1432 may also extend in other directions.

In the above-described solution, the tab connecting portion 143 may be of an equal-width structure, or a variable-width structure.

As shown in Fig. 9, in some embodiments of the present application, the tab connecting portion 143 is of an equal-width structure with the third edge 1431 and the fourth edge 1432 being provided in parallel.

In other embodiments, the tab connecting portion 143 gradually decreases in width in the extension direction away from the transitional portion 142 so as to occupy a small width range of the tab 132.

The transitional portion 142 is used for connecting the terminal connecting portion 141 and the tab connecting portion 143 so as to transmit electric power from the tab 132 to the electrode terminal 122. The overcurrent capacity of the transitional portion 142 has a great influence on the overcurrent capacity of the current collecting member 14, namely, the overcurrent capacity of the current collecting member 14 can be improved by improving the overcurrent capacity of the transitional portion 142. In order to improve the overcurrent capacity of the transitional portion 142, the overcurrent area of the transitional portion 142 may be increased by increasing the width or thickness of the transitional portion 142.

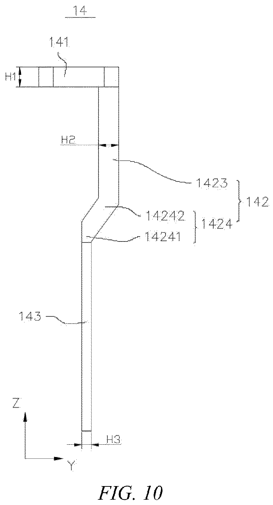

Fig. 10 shows a schematic structural diagram of a current collecting member 14 in an embodiment of the present application, from a fourth perspective.

As shown in Fig. 10, in some embodiments of the present application, the transitional portion 142 has a thickness H2 greater than the thickness H3 of the tab connecting portion 143.

For example, the tab connecting portion 143 has a thickness H3 of 2 mm to ensure that the tab connecting portion 143 can be firmly and effectively in conductive connection with the tab 132 so as to avoid false welding. On this basis, the transitional portion 142 may have a thickness H2 of 2.5-3 mm to further improve the overcurrent capacity of the transitional portion 142 and thus the overcurrent capacity of the current collecting member 14.

In some embodiments of the present application, the transitional portion 142 has the same thickness as the terminal connecting portion 141 to simplify the construction of the current collecting member 14, so that the terminal connecting portion 141 and the transitional portion 142 can be formed only by punching and bending.

For example, the tab connecting portion 143 has the thickness H3 of 2 mm, and the transitional portion 142 has the same thickness as the terminal connecting portion 141, for example, H1 = H2 = 2.5-3 mm.

In other embodiments, the current collecting member 14 may be of an equal-thickness structure to be easily manufactured.

As shown in Fig. 10, the transitional portion 142 comprises a first segment 1423 and a second segment 1424, wherein one end of the first segment 1423 is connected to the terminal connecting portion 141, the other end of the first segment 1423 is connected to one end of the second segment 1424, and the other end of the second segment 1424 is connected to the tab connecting portion 143.

In the above-described solution, the first segment 1423 and the second segment 1424 may have various extension forms so that the transitional portion 142 is included in the space occupied by the maximum external contour of the electrode assembly 13 to avoid an increase in the external dimension of the electrode assembly 13.

In some embodiments of the present application, the first segment 1423 is parallel to the tab connecting portion 143, and the second segment is inclined relative to the first segment 1423 and the tab connecting portion 143.

The thickness direction of the tab 132 is parallel to the Y direction, and when the tab connecting portion 143 is welded to the tab 132, the thickness at the center of the tab 132 in the Z direction is smaller than those at two ends thereof. The tab connecting portion 143 is attached to a central region of the tab 132, the first segment 1423 is parallel to the tab connecting portion 143 so as to be attached to an end region of the tab 132, and the second segment 1424 is inclined relative to the first segment 1423 to be bent from the end region to the central region of the tab 132, such that the transitional portion 142 is located within the space occupied by the maximum external contour of the electrode assembly 13.

In other embodiments, the first segment 1423 and the second segment 1424 may extend in the same direction, namely, the transitional portion 142 is in a shape that extends in a straight line, to simplify the construction of the current collecting member 14.

In some embodiments of the present application, the transitional portion 142 has the thickness H2 greater than the thickness H3 of the tab connecting portion 143. Since the overcurrent capacity of the transitional portion 142 of the current collecting member 14 limits the overcurrent capacity of the current collecting member 14, the overcurrent capacity of the current collecting member 14 can be effectively improved by increasing the overcurrent area of the transitional portion 142.

In other embodiments, the transitional portion 142 and the tab connecting portion 143 may also have the same thickness to simplify the construction of the current collecting member 14, allowing punch forming with sheet metal parts of equal thickness, and reducing manufacturing costs.

In the above-described solution, the transitional portion 142 has the thickness H2 greater than the thickness H3 of the tab connecting portion 143, and two ends of the second segment 1424 in an extension direction thereof are respectively connected to the first segment 1423 and the tab connecting portion 143. The second segment 1424 may have a thickness varied gradually from the end thereof connected to the first segment 1423 to the end thereof connected to the tab connecting portion 143, or comprise a partial equal-thickness structure and a partial thickness-gradually varied structure that are connected each other, so as to increase the overall overcurrent capacity of the transitional portion.

As shown in Fig. 10, in some embodiments of the present application, the second segment 1424 comprises a thickness-gradually varied region 14241 and a thickness-maintained region 14242 that are connected to each other. The thickness-maintained region 14242 is connected to the first segment 1423, the thickness-maintained region 14242 has a thickness equal to that of the first segment 1423, the thickness-gradually varied region 14241 is connected to the tab connecting portion 143, and the thickness-gradually varied region 14241 has a thickness gradually increasing from the end thereof connected to the tab connecting portion 143 to the end thereof connected to the thickness-maintained region 14242.

The thickness-gradually varied region 14241 is provided in the first segment 1423 and the thickness-maintained region 14242, and the thickness-gradually varied region 14241 has a thickness gradually increasing from the end thereof connected to the first segment 1423 to the end thereof connected to the thickness-maintained region 14242, so that the strength and the overcurrent capacity of the thickness-gradually varied region 14241 gradually increase toward the thickness-maintained region 14242, and the strength and the overcurrent capacity at all parts of the current collecting member 14 uniformly change in the extension direction thereof.

In other embodiments, the second segment 1424 may not be provided with the thickness-maintained region 14242, and the transitional portion 142 has a thickness gradually increasing from the tab connecting portion 143 to the terminal connecting portion 141.

It should be noted that, in the case of no conflict, the features in the embodiments of the present application can be combined with each other.

The foregoing descriptions are merely preferred embodiments of the present application, but are not intended to limit the present application. For those skilled in the art, the present application may have various modifications and variations. Any modifications, equivalent substitutions, improvements, and the like made within the spirit and principle of the present application should be included within the scope of protection of the present application.

## Claims

1. A current collecting member for a battery cell, comprising:
a terminal connecting portion for connection to an electrode terminal of the battery cell;
a tab connecting portion for connection to a tab of the battery cell; and
a transitional portion for connecting the terminal connecting portion and the tab connecting portion;
wherein the transitional portion has a width greater than that of the tab connecting portion.

2. The current collecting member according to claim 1, wherein the transitional portion comprises a first edge and a second edge that are opposite each other in a width direction thereof, on a plane perpendicular to an extension direction of the tab connecting portion, a projection of the tab connecting portion being located between a projection of the first edge and a projection of the second edge.

3. The current collecting member according to claim 2, wherein the tab connecting portion comprises a third edge and a fourth edge that are opposite each other in a width direction thereof, a first step being formed between the third edge and the first edge, and a second step being formed between the fourth edge and the second edge.

4. The current collecting member according to claim 3, wherein the third edge is parallel to the first edge, and the fourth edge is parallel to the second edge.

5. The current collecting member according to any one of claims 1-4, wherein the transitional portion has a thickness greater than that of the tab connecting portion.

6. The current collecting member according to any one of claims 1-4, wherein the transitional portion comprises a first segment and a second segment, one end of the first segment being connected to the terminal connecting portion, the other end of the first segment being connected to one end of the second segment, the other end of the second segment being connected to the tab connecting portion, the first segment being parallel to the tab connecting portion, and the second segment being inclined relative to the first segment and the tab connecting portion.

7. The current collecting member according to claim 6, wherein the second segment comprises a thickness-gradually varied region and a thickness-maintained region that are connected to each other, the thickness-maintained region being connected to the first segment, the thickness-maintained region having a thickness equal to that of the first segment, the thickness-gradually varied region being connected to the tab connecting portion, and the thickness-gradually varied region having a thickness gradually increasing from the end thereof connected to the tab connecting portion to the end thereof connected to the thickness-maintained region.

8. A battery cell, comprising:
a housing provided with an opening;
an electrode assembly provided inside the housing, the electrode assembly comprising a tab;
an end cap assembly comprising a cover plate and an electrode terminal, the cover plate being used for covering the opening, and the electrode terminal being provided on the cover plate; and
a current collecting member according to any one of claims 1-7, the terminal connecting portion being connected to the electrode terminal, and the tab connecting portion being connected to the tab.

9. A battery, comprising a battery cell according to claim 8.

10. A power consuming device, comprising a battery according to claim 9.
